# FASCICULE DE BREVET EUROPEEN

(11) **EP 0 406 498 B1**
(45) Date de publication et mention de la délivrance du brevet: **18.12.1996**
(21) Numéro de dépôt: 89401934.8
(22) Date de dépôt: 06.07.1989
(51) Int. Cl.: C08G 8/10, C04B 26/12, C04B 41/48

(54) **Solution aqueuse de résine phénol-formaldéhyde contenant un sel de métal alcalino-terreux soluble dans l'eau, utile dans une composition de liant pour fibres minérales et procédé pour l'obtenir**
Wässerige Lösung von Phenolformaldehydharzen, enthaltend ein wasserlösliches Erdalkalimetallsalz, Anwendung in einer Bindemittelzusammensetzung für anorganische Fasern und Verfahren zu ihrer Herstellung
Aqueous solution of a phenol formaldehyde resin containing a water-soluble alkaline-earth metal salt for use in a binder composition for mineral fibres and process for its preparation

(43) Date de publication de la demande: 09.01.1991
(73) Titulaire: ISOVER SAINT-GOBAIN, F-92400 Courbevoie (FR)
(72) Inventeur: Creamer, Albert W., Croydon, PA 19020 (US)
(74) Mandataire: Luziau, Nelly

(56) Documents cités:
- US-A- 3 932 334
- US-A- 4 028 367
- PATENT ABSTRACTS OF JAPAN, vol. 3, no. 79 (C-51), 6 juillet 1979; & JP-A-54 55 097

## Description

La présente invention concerne de façon générale les résines à utiliser pour la préparation des liants destinés à des produits formés de fibres minérales, mais plus spécifiquement des procédés pour préparer des résines phénol-formaldéhyde solubles dans l'eau, les liants pour fibres de verre comprenant de telles résines et les produits à base de fibres de verre formés au moyen de ces liants.

Les résines phénoliques sont bien connues pour leur utilisation dans la préparation des liants pour produits à base de fibres de verre, comme les isolants thermiques et acoustiques, les mats de fibres de verre de renforcement et les panneaux de circuits imprimés. Par exemple, le brevet US-A-3 932 334 décrit des résols phénol-formaldéhyde qui sont simultanément solubles dans l'eau et thermodurcissables, de même que des systèmes liants à base de ces résols à utiliser pour lier des fibres de verre en vue de fabriquer des produits tels que des nappes isolantes. Typiquement, pour la préparation du liant, d'autres composants tels que d'autres résines, des monomères et des additifs sont également ajoutés en plus de la résine phénol-formaldéhyde soluble dans l'eau. Des proportions sensibles de résines azotées, comme les résines urée-formaldéhyde et mélamine-formaldéhyde, et/ou de monomères tels que l'urée, la mélamine et le dicyanodiamide, qui sont condensables avec les résines phénol-formaldéhyde, peuvent être ajoutés. Typiquement, après l'application du liant sur les fibres de verre, un apport de chaleur volatilise le solvant aqueux et durcit le liant.

En pratique, du fait que le liant a une durée d'emploi relativement brève (de l'ordre de quelques heures), il est habituellement préparé peu avant l'usage à l'usine produisant les fibres de verre. D'autre part, la résine phénol-formaldéhyde soluble dans l'eau peut avoir une durée d'emploi quelque peu plus longue (de l'ordre de quelques jours ou semaines) et il est habituellement souhaitable de préparer la résine phénol-formaldéhyde à l'endroit où les matières premières très réactives sont disponibles et de transporter ensuite la résine jusqu'à l'usine où sont produites les fibres de verre plutot que d'expédier le phénol et le formaldéhyde jusqu'à l'atelier de fabrication.

La résine phénol-formaldéhyde est préparée par réaction entre le phénol et le formaldéhyde en solution aqueuse dans des conditions basiques. Un catalyseur est utilisé pour favoriser la méthylolation du phénol. La catalyse par les dérivés basiques de métaux alcalins ou alcalino-terreux est bien connue, voir, par exemple, le brevet EUA 2.676.898. Il est connu que l'utilisation de l'oxyde de calcium conduit à un certain nombre de résultats favorables, comme une meilleure efficacité de la résinification et une augmentation de l'efficacité d'application et de l'aptitude au durcissement des liants préparés au moyen de ces résines. D'autres composés basiques de métaux alcalino-terreux, principalement l'hydroxyde de baryum, comme exposé dans le brevet anglais n° 905.393, ont été utilisés comme catalyseurs pour préparer des résines phénol-formaldéhyde, mais l'emploi des bases calciques est fortement favorisé pour des raisons de prix.

Lors de la préparation de la résine phénol-formaldéhyde, la solution aqueuse basique est normalement neutralisée lorsque le degré souhaité de résinification a été atteint. Un inconvénient notable auquel expose l'utilisation des bases calciques pour catalyser la réaction du phénol et du formaldéhyde formant les résols a été la faible solubilité en milieu aqueux des sels de calcium formés lors de la neutralisation du mélange de réaction. Le brevet EUA n° 3.624.247 décrit l'élimination des ions calcium de solutions de résine phénol-formaldéhyde par addition d'un sel d'ammonium apportant une espèce anionique qui forme un précipité insoluble avec le calcium. Toutefois, bien que la neutralisation puisse être exécutée d'une façon qui favorise la formation des sels de calcium insolubles en particules fines, la présence de ces particules est indésirable. La matière particulaire peut sédimenter dans la solution de résol au cours du stockage, ce qui complique le transfert de la solution de résol et la préparation du liant. De graves difficultés peuvent être rencontrées si la matière particulaire colmate les conduites ou ajutages utilisés pour appliquer le liant sur les fibres de verre. La matière particulaire pourrait en théorie être éliminée par des moyens physiques, par exemple par filtration, centrifugation, décantation ou analogues, mais ces opérations préparatoires supplémentaires pourraient augmenter sensiblement le coût du résol. De plus, la séparation physique du précipité pourrait être de nature à faire baisser le rendement en résol et à donner un sous-produit de précipité et de résol non durci dont il faudrait se débarrasser d'une manière écologiquement satisfaisante. Une solution plus simple du problème est nécessaire.

Récemment, il a été proposé d'ajuster le pH de la solution de résine entre 7,5 et 11,0 et d'ajouter lentement du sulfate sous la forme d'acide sulfurique ou de sulfate d'ammonium pour former un complexe avec les ions calcium. Suivant les indications du brevet EUA 4.650.825, le complexe est stable pendant au moins quelques heures, ce qui permet de préparer un liant avec la solution du résol et d'appliquer ensuite le liant sur les fibres de verre pour former un produit lié. Toutefois, la stabilité du complexe de calcium est limitée et il est incommode de préparer une résine phénol-formaldéhyde suivant ce procédé en dehors de l'atelier et d'expédier ensuite la résine à l'atelier de fabrication où elle sera consommée, parce que la précipitation est susceptible d'avoir lieu avant que le liant puisse être appliqué. Une solution plus durable du problème est souhaitable.

Il est par ailleurs connu du brevet américain US-3 932 334 un procédé de fabrication de liant pour fibres minérales comprenant une résine du type résol. Cette résine est obtenue en mélangeant formaldéhyde et phénol avec une proportion molaire importante en formaldéhyde, ainsi qu'un catalyseur basique sous forme d'hydroxyde de calcium, avec un contrôle très pointu de la température de réaction. En fin de réaction, la résine est soit neutralisée à un pH supérieur à 7, soit laissée sans effectuer de neutralisation avant de préparer le liant.

La présente invention a pour objet un procédé pour préparer un résol soluble dans l'eau ayant une meilleure durée d'emploi en vue de son utilisation ultérieure dans la préparation d'un liant pour des fibres minérales, comme des fibres de. verre ou de la laine de roche, destinées aux isolants thermiques ou acoustiques à usage privé ou industriel, ou pour des nappes de fibres de verre destinées au revêtement de toiture, séparateurs de batteries, matières plastiques armées, etc. Le résol soluble dans l'eau peut être formé par condensation de phénol et de formaldéhyde. Le procédé donne une solution aqueuse d'un résol soluble dans l'eau qui contient un sel de calcium soluble dans l'eau plutôt qu'un sel de calcium précipité.

Du fait que le sel de calcium est soluble dans l'eau, la solution de résol peut être préparée en un endroit où le phénol et le formaldéhyde sont aisément disponibles, et être ensuite transportée jusqu'à un second endroit lointain où elle est consommée, sans subir entretemps de précipitation du sel de calcium, bien que plusieurs semaines puissent s'écouler entre la préparation de la résine et son utilisation.

Le procédé comprend la préparation d'un mélange aqueux de l'aldéhyde et du phénol dans un rapport molaire d'environ 1,5:1 à 5,0:1 et l'addition d'un composé calcium, au mélange aqueux en une quantité efficace pour catalyser la réaction entre l'aldéhyde et le phénol. Les composés du calcium, comme l'hydroxyde de calcium et l'oxyde de calcium, sont des catalyseurs spécialement préférés. Le procédé comprend aussi la réaction de l'aldéhyde et du phénol dans des conditions basiques et en présence du composé de calcium pour la formation d'une solution aqueuse d'un résol phénol-aldéhyde, puis l'addition d'acide sulfamique à la solution aqueuse pour former une solution de résine ayant une stabilité améliorée. L'acide sulfamique est ajouté en une quantité suffisante pour établir un pH inférieur à 7 et d'au moins 6.

Si la chose est souhaitée, le pH peut être ajusté d'abord pour la formation d'une solution très acide, par exemple d'un pH d'environ 1, au moyen d'acide sulfamique. Le pH peut être ajusté ensuite pour la formation d'une solution neutre (par exemple d'un pH d'environ 7 ou davantage). La solution acide peut être neutralisée par addition d'une base, comme une mono-, di- ou tri-alcanolamine.

Suivant le procédé, le composé du calcium est ajouté de préférence en une quantité d'environ 1 à 10% en poids, à calculer en oxyde de calcium sur la base du phénol, et plus avantageusement en une quantité d'environ 3 à 6%, sur la même base. Lorsque le phénol et le formaldéhyde sont utilisés, il est préféré que le rapport molaire du formaldéhyde au phénol soit d'environ 3,2:1 à 3,8:1.

Dans une forme de réalisation actuellement préférée du procédé de l'invention, la température du mélange aqueux de formaldéhyde et de phénol est maintenue à une première valeur d'environ 40°C à 50°C lorsque le catalyseur est ajouté, la température étant ensuite admise à s'élever jusqu'à une seconde valeur d'environ 60°C à 80°C dans un délai d'environ 30 minutes. La température est de préférence maintenue à la seconde valeur jusqu'à ce que la teneur en formaldéhyde libre baisse jusqu'à une valeur d'environ 10% du poids du mélange de réaction, après quoi l'acide sulfamique est ajouté. Si de l'acide sulfamique solide est ajouté, le mélange de réaction est de préférence d'abord refroidi entre 30°C et 40°C.

La neutralisation du mélange aqueux basique de résol par l'acide sulfamique donne une solution aqueuse améliorée de résol préparée par catalyse alcaline avec un composé de calcium et contenant un sel de calcium en solution. La solution aqueuse de résol ne doit pas être filtrée ou traitée autrement avant d'être utilisée en vue de séparer un précipité formé par réaction entre le cation de calcium et l'anion de l'agent de neutralisation ou une autre espèce anionique présente dans la solution. La solution exempte de précipité peut être conservée pendant plusieurs semaines sans formation d'une quantité sensible de précipité et sensiblement sans poursuite non désirée de la condensation du résol. Pendant cette durée, la solution de résol peut être expédiée d'une usine de fabrication centrale à des ateliers de fabrication de fibres minérales où un liant comprenant la solution de résol peut être préparé et appliqué.

Pour la préparation du liant, la solution aqueuse du résol est de préférence mise à réagir avec au moins un réactant azoté choisi parmi l'urée, l'ammoniac, les sels d'ammonium, le dicyanodiamide, la mélamine et les résines aminoplastes. La réaction avec l'urée est spécialement préférée et le réactant azoté est de préférence ajouté en une quantité efficace pour réagir avec sensiblement tout le formaldéhyde résiduel. Dans les formes de réalisation de l'invention, les réactants azotés sont généralement ajoutés en quantités s'échelonnant de 20% à 75% en poids de solides totaux, avec une préférence pour l'intervalle de 20% à 50%.

Le liant, qui peut comprendre aussi en plus du résol et du réactant azoté d'autres composants tels qu'une huile minérale lubrifiante et des silanes promoteurs d'adhérence, peut être appliqué suivant des procédés traditionnels sur les fibres minérales, par exemple les fibres de verre, la laine de roche etc. et être durci thermiquement. Les produits résultants peuvent être utilisés pour l'isolation thermique ou acoustique, pour le renforcement des produits pour toitures ou des matières plastiques, comme les panneaux pour circuits imprimés, ou à des fins semblables, suivant les caractéristiques des fibres de verre elles-mêmes, l'épaisseur et la densité du mat de fibres, le rapport entre le liant et les fibres et des facteurs analogues.

L'utilisation de solutions aqueuses de résols phénol-formaldéhyde préparées par le procédé de l'invention est spécialement avantageuse pour la fabrication de nappes et rouleaux de fibres minérales servant d'isolant thermique et ces produits présentent de façon inattendue plus d'épaisseur que ceux qui contiennent des liants traditionnels. L'isolant thermique, qui est normalement comprimé avant expédition pour diminuer les coûts et augmenter la facilité de manutension, est admis à s'expanser avant d'être mis en place. La plus grande élasticité donne un produit installé plus épais et par conséquent une conductivité thermique plus faible et une isolation thermique plus élevée (coefficient R).

### DESCRIPTION DETAILLEE DES FORMES DE REALISATION PREFEREES

Le résol soluble dans l'eau produit par le procédé de la présente invention peut être du type phénol-formaldéhyde. Le phénol peut être du phénol de qualité industrielle et le formaldéhyde peut être le produit de qualité industrielle. Les solutions aqueuses de phénol de qualité industrielle sont souvent stockées à une température d'environ 45°C à laquelle le mélange eau/phénol forme une solution binaire vraie et par conséquent, cette température est une température de départ opportune pour la préparation de la résine. D'autres composés aromatiques à fonctionnalité hydroxyle peuvent être utilisés en supplément du phénol lui-même ou au lieu de celui-ci. De même,d'autres aldéhydes réactifs peuvent remplacer pour tout ou partie le formaldéhyde pour donner la solution aqueuse du résol soluble dans l'eau. La préparation de ces résols est passée en revue et décrite dans R. W. Martin, The Chemistry of Phenolic Resins (John Wiley & Sons, Inc., New York 1956), pages 88-97.

Une condensation sous catalyse alcaline du phénol et de l'aldéhyde est appliquée pour la préparation de la résine. La réaction, qui est exothermique, est amorcée par addition du catalyseur après que le phénol et l'aldéhyde ont été mélangés. Le rapport entre le phénol et l'aldéhyde est choisi pour donner une résine du type résol (excès stoechiométrique de formaldéhyde) et lorsque le formaldéhyde et le phénol sont utilisés, le rapport molaire du formaldéhyde au phénol est de préférence d'environ 1,5:1 à 5,0:1 et plus avantageusement d'environ 3,2:1 à 3,8:1.

Le catalyseur utilisé dans le procédé comprend au moins un composé de calcium. En fait, l'oxyde de calcium et l'hydroxyde de calcium sont les catalyseurs préférés.

L'ajustement du pH du milieu de réaction aqueux peut être effectué très simplement par addition d'un composé basique, comme l'hydroxyde de calcium, ou le monohydrogénophosphate de calcium, ou analogues, ou bien par addition d'un composé de calcium formant une solution basique lors de son addition à un milieu aqueux, comme le fait l'oxyde de calcium. Toutefois, ceci a pour inconvénient de fixer le pH sur base de la concentration du catalyseur utilisé. Si la chose est souhaitée, le pH du mélange de réaction aqueux peut être modifié indépendamment par l'apport d'autres composés inorganiques ou organiques acides ou basiques. De préférence, le pH du mélange de réaction est ajusté entre environ 8 et 9,5 par addition d'un composé basique de calcium, et un ajustement indépendant du pH du milieu de réaction aqueux n'est pas nécessaire. Si un tel ajustement indépendant est exécuté, il est souhaitable d'utiliser des bases de métaux alcalino-terreux plutôt que des bases de métaux alcalins telles que l'hydroxyde de sodium ou l'hydroxyde de potassium, pour améliorer la tenue à l'humidité des liants préparés au moyen de la résine.

Lorsqu'un composé basique du calcium est utilisé, il est de préférence ajouté en une quantité d'environ 3 à 6% en poids, à calculer en oxyde de calcium sur la base du poids du phénol.

La réaction de condensation entre un phénol et un aldéhyde est exothermique. De préférence, la température du mélange de réaction est réglée par refroidissement du mélange de réaction suivant les besoins après que la réaction entre le phénol et l'aldéhyde a commencé. Dans une forme de réalisation actuellement préférée du procédé de l'invention, un mélange aqueux de phénol et de formaldéhyde est initialement maintenu à une première température d'environ 40°C à 50°C tandis que le catalyseur est ajouté et le pH alcalin souhaité est atteint. Dans ce cas, la concentration initiale en phénol dans le mélange de réaction est d'environ 30% du poids du mélange de réaction et la concentration initiale en formaldéhyde du mélange de réaction est d'environ 35% en poids sur la même base. Les solutions aqueuses industrielles de phénol sont typiquement maintenues à une température d'environ 45°C pour éviter une séparation des phases et maintenir le phénol en solution. Après que le catalyseur a été ajouté et que la réaction de condensation exothermique entre le phénol et le formaldéhyde est amorcée, la température est de préférence admise à s'élever jusqu'à une seconde valeur d'environ 60°C à 80°C dans un délai d'environ 30 minutes. Comme il est bien connu dans le domaine de la production des résines, l'ampleur du dégagement de chaleur observé dépend de variables telles que la concentration des réactants, la nature et la concentration du catalyseur ajouté, le pH du mélange de réaction aqueux et le volume du mélange de réaction, outre de facteurs tels que la vitesse de refroidissement du récipient de réaction ou cuve à résine, l'efficacité du refroidissement, la conception du récipient de réaction et ainsi de suite. Dans la forme de réalisation actuellement préférée, le mélange de réaction est maintenu à cette seconde température jusqu'à ce que la teneur en formaldéhyde libre baisse jusqu'à environ 10% du poids du mélange de réaction, comme l'indique une extrapolation d'une mesure antérieure de la teneur en formaldéhyde libre au moyen d'une courbe d'étalonnage. A ce moment, le mélange de réaction est neutralisé par addition d'acide sulfamique.

L'acide sulfamique peut être dissous dans de l'eau pour la formation d'une solution aqueuse en vue de la commodité de manipulation et de mélange. Par exemple, une solution aqueuse d'acide sulfamique ayant une concentration d'environ 25% en poids peut être utilisée pour neutraliser le mélange de réaction. De préférence, l'acide sulfamique est ajouté au mélange de réaction en une quantité suffisante pour ajuster l'acidité de la solution à un pH d'environ 4 à 8 et de préférence d'environ 6,0 à 7,0. Dans le cas de la forme de réalisation actuellement préférée, une solution aqueuse d'acide sulfamique peut en règle générale être ajoutée directement au mélange de réaction à la seconde température. Toutefois, si de l'acide sulfamique solide est ajouté directement au mélange de réaction, il est préférable de refroidir d'abord le mélange de réaction jusqu'à une température déterminée au préalable d'environ 30°C à 40°C, parce que la dissolution de l'acide sulfamique dans un milieu aqueux est elle-même exothermique. Si de l'acide sulfamique solide était ajouté au mélange de réaction à la seconde température déterminée au préalable, il est possible que la chaleur de dissolution élève la température jusqu'à une valeur indésirablement élevée provoquant une poursuite prématurée de la condensation de la résine et réduisant ainsi sa solubilité dans l'eau.

Lorsque le pH de la solution alcaline de résol est ajusté à environ 6,5 par addition d'acide sulfamique, le calcium est ainsi solubilisé pour environ 85% en poids, croit-on. Les 15% restants du calcium peuvent se trouver sous la forme d'un précipité insoluble ou former ensuite un tel précipité, par exemple par réaction avec le dioxyde de carbone ambiant dissous donnant un précipité de carbonate de calcium insoluble. Une quantité aussi faible de calcium insolubilisé résiduel ne constitue généralement pas une difficulté significative pour l'utilisation du résol aqueux, mais sensiblement tout le calcium peut être solubilisé, si la chose est souhaitée. Ceci peut être effectué en ajoutant suffisamment d'acide sulfamique pour former une solution aqueuse de résol ayant un pH peu élevé, par exemple d'environ 1 sinon moins, puis en neutralisant la solution, par exemple par addition d'une mono-, di- ou trialcanolamine telle que la mono-, di- ou triéthanolamine, ou d'un mélange en contenant, pour obtenir une solution neutre, par exemple une solution de résol ayant un pH d'environ 7 ou un peu supérieur à 7. La neutralisation peut être effectuée par addition d'une base qui est réactive avec l'aldéhyde, comme la mono- ou diéthanolamine. En variante, une base qui n'est pas réactive avec l'aldéhyde, comme la triéthanolamine, peut être utilisée. On est porté à croire qu'une solution ayant un pH de 7 ou davantage peut être quelque peu plus stable qu'une solution ayant un pH d'environ 6,5. Dès lors, ces opérations supplémentaires peuvent être exécutées lorsqu'il est souhaité d'obtenir une solution aqueuse de résol spécialement stable.

Après que l'atténuation de l'alcalinité du mélange de réaction a été réalisée et que la solution a été refroidie jusqu'à 10°C - 15°C, la réaction de condensation est effectivement arrêtée. La solution de résol maintenue dans l'intervalle de température ci-dessus peut être conditionnée, par exemple dans des barils, et conservée jusqu'à nécessité ou bien être amenée à un véhicule de transport tel qu'un camion-citerne ou wagon de chemin de fer pour être expédiée vers un second site où le liant pour les fibres minérales doit être produit.

L'addition de l'acide sulfamique au mélange de réaction conduit, croit-on, à la formation d'un sulfamate de calcium soluble, mais la nature exacte de l'espèce soluble du calcium et du sulfamate n'est pas connue. Il est connu que le sulfamate de calcium est soluble dans l'eau.

La solution aqueuse de résol soluble dans l'eau produite par le procédé décrit ci-dessus peut être utilisée pour préparer un liant aqueux pour des produits à base de fibres minérales. Typiquement, dans de tels produits, le liant est répandu en pluie sur les fibres minérales, par exemple des fibres de verre, qui sont ensuite rassemblées en une nappe ou en un mat non tissé. Les caractéristiques et l'utilité des produits obtenus sont déterminées par la nature des fibres minérales, la longueur et le diamètre des fibres, la densité de la nappe et ainsi de suite. Pour certaines applications, il peut être souhaitable de tisser les fibres ou d'en former autrement une étoffe.

Le liant aqueux est typiquement préparé en mélangeant la solution aqueuse de résine phénol-formaldéhyde avec un co-réactant azoté et en ajoutant de l'eau pour ajuster la teneur en solides.

Le réactant azoté peut être toute substance azotée dont il est connu qu'elle réagit avec les résols phénol-formaldéhyde. Des exemples de réactants azotés qui peuvent être utilisés sont notamment l'urée, la thiourée, l'ammoniac, les sels d'ammonium tels que le chlorure d'ammonium, le nitrate d'ammonium et le sulfate d'ammonium, le dicyanodiamide, la mélamine, les résines aminoplastes telles que les résines formées par condensation de formaldéhyde avec une amine ou un amide, comme les résines urée-formaldéhyde, les résines mélamine-formaldéhyde et les résines dicyanodiamide-formaldéhyde. L'urée est un réactant azoté préféré. De préférence, le réactant azoté est ajouté en quantité suffisante pour réagir avec sensiblement tout le formaldéhyde résiduel du résol. Dans une forme de réalisation actuellement préférée, les réactants azotés sont ajoutés en une quantité s'élevant jusqu'à environ 75% en poids, sur base du poids des solides totaux du liant.

Le liant aqueux peut aussi comprendre d'autres additifs, comme de l'huile minérale pour la lubrification et un organosilane pour améliorer l'adhérence de la résine sur les fibres minérales. L'huile minérale peut être ajoutée au liant sous la forme d'une émulsion aqueuse. Un exemple d'un silane améliorant l'adhérence qui peut être ajouté est l'aminoéthylpropyl-triméthoxysilane.

D'autres additifs, comme des résines organiques non réactives telles que la résine (issue de la colophane) Vinsol (marque de produit de Hercules), du tallol, des composés tensio-actifs tels que les sels lignosulfoniques, des épaississants et régulateurs de la rhéologie, des colorants, des additifs chromogènes, de l'eau et analogues peuvent être ajoutés aussi au liant aqueux.

Le liant aqueux peut être appliqué sur les fibres minérales ou sur un mat ou un tissu de fibres minérales et être ensuite séché et durci pour la formation du produit. Les fibres minérales peuvent être des fibres de verre et le mat peut être un mat non tissé. Les fibres minérales peuvent être continues ou discontinues. Elles peuvent prendre la forme d'une laine de fibres minérales. Lorsque des fibres de verre sont utilisées, celles-ci peuvent être formées suivant tout procédé classique, par exemple le soufflage à la flamme ou à la vapeur, le filage centrifuge en fibres et ainsi de suite. La forme, la densité des fibres, la longueur des fibres, l'orientation des fibres et des caractéristiques semblables du mat de fibres dépendent de l'application envisagée pour les produits. Une application spécialement importante est l'isolation thermique. Dans ce cas, les mats de fibres peuvent prendre la forme de rouleaux ou de nappes continues de fibres de verre non tissées et orientées au hasard. Un mat semblable est utilisé pour la production de nappes de fibres de verre pour l'isolation acoustique.

Pour la production d'un isolant thermique ou acoustique en fibres de verre, le liant aqueux est normalement pulvérisé sur les fibres avant que celles-ci soient collectées en un mat. Ensuite, le mat humecté de la solution aqueuse du liant est typiquement séché à chaud pour l'élimination de l'eau et les composés résineux notamment le résol et le réactant azoté sont durcis pour donner un liant infusible dans le mat de fibres minérales.

Lorsque des rouleaux ou nappes d'un isolant thermique sont produits à l'aide de fibres de verre et d'un résol phénol-formaldéhyde obtenu par le procédé de la présente invention, les rouleaux ou nappes d'isolant manifestent une meilleure reprise en épaisseur après compression. Ceci est une importante performance pour un isolant thermique, du fait que ces rouleaux et nappes sont typiquement comprimés pour l'expédition après la fabrication. Ultérieurement, avant l'installation, les rouleaux ou nappes sont relâchés pour la reprise. En règle générale, plus l'épaisseur du rouleau ou de la nappe est grande, et plus faible est la conductivité thermique et plus grande l'isolation thermique (coefficient R) qu'assure le rouleau ou la nappe. Par conséquent, du fait qu'ils reprennent une plus grande proportion de leur épaisseur d'origine que les rouleaux ou nappes produits à l'aide des liants traditionnels, y compris les résines phénol-formaldéhyde, les rouleaux et nappes d'isolant thermique produits suivant l'invention assurent une meilleure isolation que les produits comparables traditionnels.

Le résol de la présente invention peut être utilisé aussi pour préparer des liants destinés à d'autres produits à base de fibres minérales, comme des séparateurs pour accumulateurs, des produits pour toitures, des matières plastiques armées, des panneaux pour circuits imprimés et des isolants électriques, de même que pour des produits de transformation du bois tels que des panneaux de particules, des panneaux de copeaux, du contre-plaqué et ainsi de suite. De plus, le résol peut être utilisé pour la préparation de vernis destinés aux circuits imprimés, aux stratifiés doublés de cuivre, aux pales de turbine, aux produits en papier stratifié et analogues, de même que pour les encres permettant l'impression au jet d'encre ou des applications semblables. De surcroît, le résol peut être utilisé pour la fabrication de mousses rigides à cellules fermées telles qu'elles sont décrites, par exemple, dans le brevet EUA 4.694.028 et utilisées dans des panneaux d'isolation thermique et analogues.

Les exemples ci-après illustrent les procédés et compositions de la présente invention pour aider à la mise en pratique de celle-ci par l'homme de métier. L'invention n'est toutefois nullement limitée par ces exemples. Sauf indication contraire, les pourcentages sont donnés sur base pondérale dans les exemples ci-après.

### EXEMPLE 1

### Préparation de résines phénol-formaldéhyde

On introduit dans un réacteur 100 kg de phénol de qualité industrielle et 223,4 kg d'une solution aqueuse à 50% (p/p) de formaldéhyde. On chauffe le réacteur et on en agite le contenu jusqu'à ce que la température du mélange se stabilise à 45°C. On maintient la température à 45°C et on ajoute 3,5 kg d'oxyde de calcium à une allure régulière en une durée de 30 minutes. Immédiatement au terme de l'addition de l'oxyde de calcium, on ajuste la température du mélange à 70 ± 1°C en une durée maximale de 30 minutes. On maintient la température ensuite pendant environ 100 minutes. A un moment critique où la teneur en formaldéhyde libre, évaluée en relation avec le poids du mélange de réaction, atteint une valeur de 10,2 ± 0,1% (p/p), on commence le refroidissement du mélange de réaction. On détermine le temps auquel cet état est atteint en extrapolant une mesure expérimentale de la teneur en formaldéhyde libre à un temps d'environ t + 20 minutes ("t" est le temps où une température de 70°C est atteinte initialement). On réalise l'extrapolation sur une courbe d'étalonnage établie expérimentalement au préalable pour le réacteur, le mélange de réaction et les conditions de réaction qu'on utilise en particulier. La courbe d'étalonnage donne l'évolution du formaldéhyde libre en fonction du temps à 70°C. On refroidit le contenu du réacteur à 20°C en 40 minutes sinon moins. On ajuste le pH du contenu du réacteur par addition d'environ 9 kg d'acide sulfamique à 100% pour atteindre un pH de 6,5 ± 0,2, en prenant un temps suffisant pour assurer que l'acide sulfamique soit complètement dissous avant la mesure du pH final. On conserve à 14 ± 2°C la solution aqueuse de résine résultante qui a une teneur nominale en solides de 52,0% (p/p), une teneur en phénol libre de 1,2% (p/p) et une teneur maximale en formaldéhyde libre de 10,0% (p/p) et qui est diluable à l'eau en toute proportion. L'oxyde de calcium utilisé doit avoir une teneur réelle en oxyde de calcium d'au moins 96,3% (p/p) et une teneur maximale en dioxyde de silicium inférieure à 0,50% (p/p).

### EXEMPLE 2

### Préparation d'un liant aqueux

On mélange 42,4 g d'une solution aqueuse à 46% (p/p) du résol phénol-formaldéhyde préparé dans l'exemple 1 avec 10,5 g d'urée et 47,1 g d'eau (rapport pondéral résol/urée de 65/35). La solution de liant résultante reste limpide après 24 heures.

### EXEMPLE DE COMPARAISON 2A

On mélange 47,9 g d'une solution aqueuse à 47% (p/p) de résine phénol-formaldéhyde préparée suivant un procédé classique (catalyse par l'hydroxyde de sodium et neutralisation par l'acide sulfurique) avec 7,5 g d'urée, 0,54 g de sulfate d'ammonium, 4,5 g d'ammoniaque et 41,4 g d'eau. Le liant résultant reste également limpide après 24 heures.

### EXEMPLE DE COMPARAISON 2B

On prépare un résol phénol-formaldéhyde catalysé par le calcium suivant le procédé décrit dans le brevet EUA 4.663.418. Pour préparer la résine, on suit sensiblement le procédé de l'exemple 1, sauf qu'on ne neutralise pas la résine par une addition d'acide sulfamique. On mélange 75,0 g d'une solution aqueuse à 49,6% (p/p) de la résine avec 20,0 g d'urée, 22,7 g d'ammoniaque, 9,5 g de solution aqueuse à 25% (p/p) de sulfate d'ammonium et 71,2 g d'eau pour obtenir un liant aqueux. Ce liant vire au vert foncé et un précipité se forme après environ 12 heures.

On recourt à l'analyse mécanique dynamique pour comparer les propriétés de durcissement des liants de l'exemple 2 et des exemples de comparaison 2A et 2B. On prépare des éprouvettes en imbibant une étoffe tissée de fibres de verre au moyen du liant aqueux et en la chauffant à 2°C/minute jusqu'à un maximum de 180°C. Le liant de l'exemple de comparaison 2B a une température de début de durcissement plus basse, tandis que les liants de l'exemple 2 et de l'exemple de comparaison 2A nécessitent à peu près la même durée pour 100% de durcissement.

Par chromatographie gazeuse, on soumet les trois mêmes liants à un test de l'odeur potentielle. On sèche à 105°C pendant 5 minutes des échantillons des solutions aqueuses de liant qu'on introduit ensuite dans un flacon scellé avec des fibres de verre et de l'eau. On détermine l'odeur potentielle en échantillonnant l'air au-dessus du liant pour y rechercher la triméthylamine. L'aire du pic obtenu à l'analyse par chromatographie gazeuse est une indication de l'odeur potentielle. Aucune corrélation directe n'a encore été établie entre l'aire du pic et l'odeur réelle du produit, mais on est porté à croire que la possibilité qu'une odeur se dégage est d'autant plus grande que l'aire du pic est plus importante.

Le liant de l'exemple de comparaison 2B se révèle avoir un pic dont l'aire est 7,5 fois supérieure à celle du pic du liant de l'exemple de comparaison 2A, tandis que l'aire du pic du liant de l'exemple 2 est trois fois plus petite que celle du pic du liant de l'exemple 2A.

On détermine la résistance à l'humidité des liants préparés suivant l'exemple 2 et les exemples de comparaison 2A et 2B en observant l'effet de l'humidité sur la résistance en traction d'éprouvettes en forme d'haltère. Le test révèle une sensibilité du liant à l'égard de l'humidité, mais aucune corrélation directe entre les effets exercés sur les éprouvettes en forme d'haltère et les effets sur des produits isolants n'a été établie. Les produits isolants ont une surface spécifique beaucoup plus élevée que les éprouvettes en forme d'haltère. On confectionne les éprouvettes en forme d'haltère par moulage d'éprouvettes (épaisseur environ 6,35 mm (0,25 pouce), longueur 76,2 mm (3 pouces), largeur 38,1 mm (1,5 pouce) aux extrémités et largeur 25,4 mm (1 pouce) au milieu des éprouvettes) en prenant 95% (p/p) de sable comme charge et 5% (p/p) de liant.

On prépare trois séries d'éprouvettes en forme d'haltère pour chaque liant et on les durcit à 180°C pendant 20 minutes. On laisse reposer une série dans les conditions ambiantes, tandis qu'on introduit les deux autres séries dans une chambre à humidité maintenue à 50°C. Après 24 heures, on procède à la rupture des éprouvettes conservées dans les conditions ambiantes et d'une série conservée dans la chambre à humidité. On procède à la rupture de la série restante après 48 heures dans la chambre à humidité. Les résultats, qui sont rassemblés au tableau I ci-après, montrent que dans les conditions de cette épreuve, le liant de l'exemple 1 a une résistance significative à l'humidité.

**TABLEAU I**

| | Poids de l'éprouvette (g)¹ | | | Résistance résiduelle après 48 h, % ¹ |
|---|---|---|---|---|
| | Conditions ambiantes | Chambre à humidité | | |
| | 24 h | 24 h | 48 h | |
| Exemple 2 | 268 | 187 | 162 | 60,4 |
| Ex.comp. 2A | 254 | 220 | 209 | 82,3 |
| Ex.comp. 2B | 268 | 206 | 204 | 76,1 |

| | | | | |
|---|---|---|---|---|
| 1. Moyenne de six déterminations | | | | |

### EXEMPLE 3

On prépare un liant aqueux sensiblement suivant l'exemple 2, sauf qu'on ajoute aussi de l'huile minérale et un aminosilane. On prépare la résine pour ce liant conformément à l'exemple 1, sauf qu'on ne refroidit pas le réacteur avant la neutralisation et qu'on utilise une solution aqueuse à 25% (p/p) d'acide sulfamique au lieu d'acide sulfamique solide à 100%. On refroidit ensuite le réacteur avant d'en transférer le contenu pour le conserver. La résine phénol-formaldéhyde a une teneur en solides de 46,07% (p/p), un pH de 6,47, une densité de 1,197 et une teneur en azote de 0,76% du poids des solides. Le liant aqueux a une teneur totale en solides de 6,41% (p/p), un pH de 6,87, une densité de 1,020 et une teneur en azote de 15,30% du poids des solides. Le liant a une teneur en résine de 65,2% du poids des solides totaux du liant, une teneur en urée de 34,8%, une teneur en huile de 13,2% et une teneur en silane de 0,17%, chacune sur la même base.

### EXEMPLE 4

On prépare un liant aqueux à l'aide d'une solution aqueuse de résol préparée suivant le procédé de l'exemple 1. Le résol aqueux a une teneur totale en solides de 52,0% (p/p), un pH de 6,80, une densité de 1,220, une teneur en phénol libre résiduel de 1,07% (p/p) et une teneur en formaldéhyde libre résiduel de 9,06% (p/p). On mélange 681,000 kg (1500 livres) du résol aqueux avec 6,617 kg (14,574 livres) d'eau, 190,680 kg (420 livres) d'urée, 21,792 kg (48 livres) de solution d'aminosilane (0,872 kg (1,92 livre) de solides) et 128,028 kg (282 livres) de dispersion d'huile minérale (90,346 kg (199 livres) d'huile minérale) pour obtenir un liant aqueux ayant une teneur totale en solides de 6,75 % (p/p) et une teneur en cendres de 0,20% (p/p).

### EXEMPLE I

### Préparation de nappes d'isolant thermique

On utilise le liant aqueux de l'exemple 3 pour fabriquer des nappes d'isolant thermique R-30 sans parement à l'aide d'un appareillage classique pour la fabrication des isolants en fibres de verre. On fabrique un produit semblable (exemple de comparaison IA) au moyen d'un liant aqueux préparé suivant le procédé de l'exemple de comparaison 2A.

On constate que le mat non durci de l'exemple I est plus souple que le mat non durci de l'exemple de comparaison IA. Le produit de l'exemple I est de coloration plus pâle que le produit de l'exemple de comparaison IA. On prélève des échantillons dans les produits et on en détermine la reprise en épaisseur en mm (pouces) immédiatement après la fabrication, de même qu'après 14 jours et 30 jours de stockage. Les résultats de ces tests sont repris au tableau II.

**TABLEAU II**

| | | Etat initial | | | |
|---|---|---|---|---|---|
| | | Ex. 1A | | Ex. I | |
| Reprise après chute² | mm | 270,92 | | 285,32 | |
| | (pouces) | (10,666) | | (11,233) | |

| | | 14 jours | | 30 jours | |
|---|---|---|---|---|---|
| | | Ex.comp. IA | Ex.I | Ex.comp. IA | Ex.I |
| Nord¹ | | | | | |
| Reprise après chute² | mm | 247,40 | 257,05 | 243,84 | 250,95 |
| | (pouces) | (9,74) | (10,12) | (9,60) | (9,88) |

| Sud¹ | | | | | |
|---|---|---|---|---|---|
| Reprise après chute² | mm | 248,67 | 255,78 | 246,89 | 252,22 |
| | (pouces) | (9,79) | (10,07) | (9,72) | (9,93) |

| | | | | | |
|---|---|---|---|---|---|
| 1. Les produits ont été fabriqués sur deux paires de lignes de production et des échantillons ont été prélevés sur chaque ligne. Une des paires de lignes est dite "Nord" et l'autre est dite "Sud". | | | | | |
| 2. La reprise après "chute" est mesurée suivant ASTM C 167. | | | | | |

On mesure aussi le potentiel d'odeur qui est repris au tableau III.

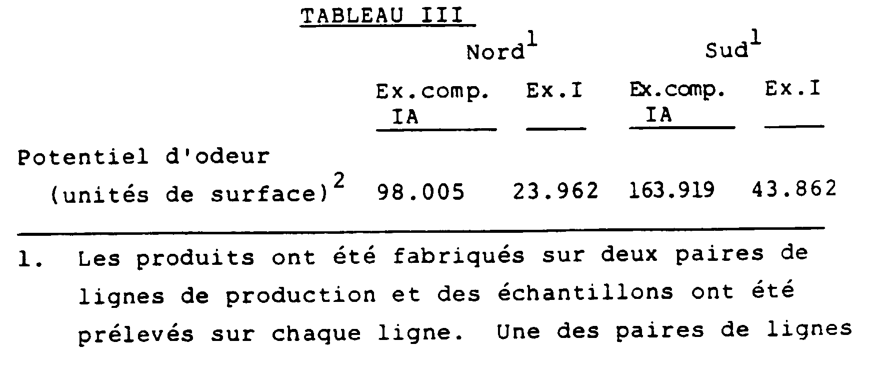

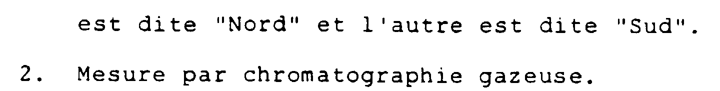

Le potentiel d'odeur du produit de l'exemple I est réduit d'un facteur de quatre par comparaison avec celui de l'exemple de comparaison IA. On mesure aussi la conductivité thermique suivant ASTM C-518 pour les matelas isolants à usage privé. On découpe des éprouvettes en tranches de 82,55 mm (3,25 pouces) et on procède aux essais à trois épaisseurs d'épreuve à une température moyenne de 24°C (75°F). D'après les données thermiques ainsi obtenues, on calcule les courbes de densité K (non représentées). Les densités des produits de l'exemple I et de l'exemple de comparaison IA requises pour la certification du coefficient R se révèlent comparables.

### EXEMPLE II

On utilise le liant aqueux de l'exemple 4 pour préparer des rouleaux (11,938 m x 381 mm) et des nappes (381 mm x 1,219 m) d'isolant thermique en fibres de verre portant un parement en papier Kraft. Après 14 jours et 83 jours, on détermine le potentiel d'odeur d'échantillons des nappes et rouleaux produits conformément à l'invention. Dans chaque cas, le potentiel d'odeur est nul. Au contraire, le potentiel d'odeur de la nappe témoin est de 350.000 après 14 jours et celui du rouleau témoin est de 1.440.000. Les mesures de la reprise après chute après 14 jours, 30 jours et 60 jours pour les nappes et après 30 jours et 60 jours pour les rouleaux montrent que les isolants thermiques de la présente invention ont une plus grande reprise en épaisseur que les produits traditionnels, la différence de reprise étant statistiquement significative avec une fiabilité de 95% pour les mesures à 60 jours et avec une fiabilité de 99% pour les mesures à 14 jours et 30 jours.

Différentes modifications peuvent être apportées aux détails des diverses formes de réalisation des procédés et compositions de l'invention sans sortir du cadre de celle-ci.

## Revendications

1. Procédé pour préparer un résol soluble dans l'eau ayant une stabilité au stockage améliorée en vue de son utilisation ultérieure dans la préparation d'un liant pour des fibres minérales, le procédé comprenant :
(a) la préparation d'un mélange aqueux d'au moins un aldéhyde et d'au moins un phénol, le rapport molaire de l'aldéhyde au phénol étant 1,5:1 à 5,0:1 ;
(b) l'addition d'un composé de calcium au mélange aqueux pour catalyser la réaction entre l'aldéhyde et le phénol ;
(c) la réaction de l'aldéhyde et du phénol dans des conditions basiques et en présence du composé de calcium pour former une solution aqueuse d'un résol ; et
(d) l'addition d'acide sulfamique à la solution aqueuse pour former une solution de résol ayant une stabilité améliorée, en une quantité suffisante pour établir un pH inférieur à 7 et d'au moins 6.

2. Procédé suivant la revendication 1, dans lequel au moins un phénol est le phénol et au moins un aldéhyde est le formaldéhyde.

3. Procédé suivant la revendication 1 ou 2, dans lequel le composé du calcium est choisi entre l'oxyde de calcium et l'hydroxyde de calcium.

4. Procédé suivant la revendication 2, dans lequel le rapport molaire du formaldéhyde au phénol est d'environ 3,2:1 à 3,8:1.

5. Procédé suivant l'une des revendications précédentes, dans lequel le composé du calcium est ajouté en une quantité d'environ 1 % à 10 % en poids, à calculer en oxyde de calcium sur la base du poids de phénol.

6. Procédé suivant la revendication 5, dans lequel le composé du calcium est ajouté en une quantité d'environ 3 % à 6 % en poids, à calculer en oxyde de calcium sur la base du poids en phénol.

7. Procédé suivant l'une des revendications précédentes, dans lequel la température du mélange aqueux de formaldéhyde et de phénol est maintenue à une première valeur de 40°C à 50°C tandis que le catalyseur est ajouté, la température étant ensuite ajustée pour monter à une seconde valeur de 60°C à 80°C dans un délai d'environ 30 minutes, puis maintenue jusqu'à ce que la teneur en formaldéhyde libre baisse jusqu'à une valeur d'environ 10 % du poids des solides du mélange de réaction.

8. Procédé suivant la revendication 7, dans lequel le mélange de réaction est neutralisé au moyen d'acide sulfamique solide, le mélange de réaction étant refroidi jusqu'entre 30°C et 40°C avant l'addition de l'acide sulfamique.

9. Procédé de préparation d'un liant pour des fibres minérales, le procédé comprenant la préparation d'une solution aqueuse d'un résol soluble dans l'eau ayant une stabilité améliorée au stockage, la solution de résol étant préparée par un procédé comprenant :
(a) la préparation d'un mélange aqueux d'au moins un aldéhyde et d'au moins un phénol, le rapport molaire de l'aldéhyde au phénol étant 1,5:1 à 5,0:1;
(b) l'addition d'un composé de calcium au mélange aqueux pour catalyser la réaction entre l'aldéhyde et le phénol ;
(c) la réaction de l'aldéhyde et du phénol dans des conditions basiques et en présence du composé de calcium pour former une solution aqueuse d'un résol ; et
(d) l'addition d'acide sulfamique à la solution aqueuse pour former une solution de résol ayant une stabilité améliorée, en une quantité suffisante pour établir un pH inférieur à 7 et d'au moins 6.

10. Procédé suivant la revendication 9, comprenant en outre l'addition d'au moins un réactant azoté choisi parmi l'urée, l'ammoniac, les sels d'ammonium, le dicyanodiamide, la mélamine et les résines aminoplastes.

11. Procédé suivant la revendication 10, dans lequel le réactant azoté est l'urée.

12. Procédé suivant la revendication 10 ou 11, dans lequel le réactant azoté est ajouté pour la réaction avec sensiblement tout le formaldéhyde résiduel dans la solution aqueuse de résol.

13. Procédé suivant l'une des revendications 10 à 12, dans lequel le réactant azoté est ajouté en une quantité s'élevant jusqu'à 75 % en poids, sur la base du poids des solides totaux.

14. Procédé de fabrication d'un produit manufacturé utile comme isolant thermique et comprenant des fibres minérales et un liant résineux pour les fibres minérales, le procédé comprenant la préparation d'une solution aqueuse d'un résol soluble dans l'eau en vue de son utilisation ultérieure dans la préparation du liant résineux par :
(a) la préparation d'un mélange aqueux d'au moins un aldéhyde et d'au moins un phénol, le rapport molaire de l'aldéhyde au phénol étant 1,5:1 à 5,0:1 ;
(b) l'addition d'un composé de calcium au mélange aqueux pour catalyser la réaction entre l'aldéhyde et le phénol ;
(c) la réaction de l'aldéhyde et du phénol dans des conditions basiques et en présence du composé de calcium pour former une solution aqueuse d'un résol ; et
(d) l'addition d'acide sulfamique à la solution aqueuse pour former une solution de résol ayant une stabilité améliorée, en une quantité suffisante pour établir un pH inférieur à 7 et d'au moins 6.

## Patentansprüche

1. Verfahren zur Herstellung eines wasserlöslichen Resols mit einer verbesserten Lagerungsbeständigkeit im Hinblick auf seine darauffolgende Verwendung bei der Herstellung eines Bindemittels für Mineralfasern, *dadurch gekennzeichnet, daß* das Verfahren umfaßt:
(a) Herstellen einer wäßrigen Mischung mindestens eines Aldehyds und mindestens eines Phenols, wobei das Molverhältnis von Aldehyd zu Phenol 1,5:1 bis 5,0:1 beträgt;
(b) Zugabe einer Calciumverbindung zu der wäßrigen Mischung zum Katalysieren der Reaktion zwischen Aldehyd und Phenol;
(c) Reaktion von Aldehyd und Phenol unter basischen Bedingungen und in Gegenwart der Calciumverbindung zur Bildung einer wäßrigen Lösung eines Resols; und
(d) Zugabe von Amidoschwefelsäure zu der wäßrigen Lösung zur Bildung einer Resollösung mit einer verbesserten Beständigkeit, und zwar in einer ausreichenden Menge, um einen pH-Wert von weniger als 7 und mindestens 6 einzustellen.

2. Verfahren nach Anspruch 1, *dadurch gekennzeichnet, daß* mindestens ein Phenol Phenol ist und mindestens ein Aldehyd Formaldehyd ist.

3. Verfahren nach Anspruch 1 oder 2, *dadurch gekennzeichnet, daß* die Calciumverbindung aus Calciumoxid und Calciumhydroxid ausgewählt wird.

4. Verfahren nach Anspruch 2, *dadurch gekennzeichnet, daß* das Molverhältnis von Formaldehyd zu Phenol ca. 3,2:1 bis 3,8:1 beträgt.

5. Verfahren nach einem der vorhergehenden Ansprüche, *dadurch gekennzeichnet, daß* die Calciumverbindung in einer Menge von ca. 1 Gew.-% bis 10 Gew.-% zugegeben wird, welche in Calciumoxid bezogen auf das Gewicht von Phenol zu berechnen ist.

6. Verfahren nach Anspruch 5, *dadurch gekennzeichnet, daß* die Calciumverbindung in einer Menge von ca. 3 Gew.-% bis 6 Gew.-% zugegeben wird, welche in Calciumoxid bezogen auf das Gewicht von Phenol zu berechnen ist.

7. Verfahren nach einem der vorhergehenden Ansprüche, *dadurch gekennzeichnet, daß* die Temperatur der wäßrigen Mischung von Formaldehyd und Phenol während der Zugabe des Katalysators auf einem ersten Wert von 40°C bis 50°C gehalten wird, die Temperatur daraufhin derart eingestellt wird, daß sie innerhalb von ca. 30 Minuten auf einen zweiten Wert von 60°C bis 80°C steigt, und daraufhin gehalten wird, bis sich der Gehalt an freiem Formaldehyd bis auf einen Wert von ca. 10 Gew.-% der Feststoffe der Reaktionsmischung vermindert.

8. Verfahren nach Anspruch 7, *dadurch gekennzeichnet, daß* die Reaktionsmischung mittels fester Amidoschwefelsäure neutralisiert wird, wobei die Reaktionsmischung vor der Zugabe der Amidoschwefelsäure auf zwischen 30°C und 40°C gekühlt wird.

9. Verfahren zur Herstellung eines Bindemittels für Mineralfasern, *dadurch gekennzeichnet, daß* das Verfahren die Herstellung einer wäßrigen Lösung eines wasserlöslichen Resols mit verbesserter Lagerungsbeständigkeit umfaßt, und die Resollösung durch ein Verfahren hergestellt wird, welches umfaßt:
(a) Herstellen einer wäßrigen Mischung mindestens eines Aldehyds und mindestens eines Phenols, wobei das Molverhältnis von Aldehyd zu Phenol 1,5:1 bis 5,0:1 beträgt;
(b) Zugabe einer Calciumverbindung zu der wäßrigen Mischung zum Katalysieren der Reaktion zwischen Aldehyd und Phenol;
(c) Reaktion von Aldehyd und Phenol unter basischen Bedingungen und in Gegenwart der Calciumverbindung zur Bildung einer wäßrigen Lösung eines Resols; und
(d) Zugabe von Amidoschwefelsäure zu der wäßrigen Lösung zur Bildung einer Resollösung mit einer verbesserten Beständigkeit, und zwar in einer ausreichenden Menge, um einen pH-Wert von weniger als 7 und mindestens 6 einzustellen.

10. Verfahren nach Anspruch 9, *dadurch gekennzeichnet, daß* es des weiteren die Zugabe mindestens eines stickstoffhaltigen Reaktanten aufweist, welcher aus Harnstoff, Ammoniak, Ammoniumsalzen, Dicyandiamid, Melamin und Aminoplastharzen ausgewählt ist.

11. Verfahren nach Anspruch 10, *dadurch gekennzeichnet, daß* der stickstoffhaltige Reaktant Harnstoff ist.

12. Verfahren nach Anspruch 10 oder 11, *dadurch gekennzeichnet, daß* der stickstoffhaltige Reaktant zugegeben wird, um im wesentlichen mit dem gesamten restlichen Formaldehyd in der wäßrigen Resollösung zu reagieren.

13. Verfahren nach einem der Ansprüche 10 bis 12, *dadurch gekennzeichnet, daß* der stickstoffhaltige Reaktant in einer Menge zugegeben wird, welche in Bezug auf das Gewicht der gesamten Feststoffe bis zu 75 Gew.-% beträgt.

14. Verfahren zur Herstellung einer Fertigware zur Verwendung als Wärmedämmittel, welche Mineralfasern und ein harzartiges Bindemittel für die Mineralfasern aufweist, *dadurch gekennzeichnet, daß* das Verfahren die Herstellung einer wäßrigen Lösung eines wasserlöslichen Resols im Hinblick auf dessen spätere Verwendung bei der Herstellung des harzartigen Bindemittels umfaßt mittels:
(a) Herstellen einer wäßrigen Mischung mindestens eines Aldehyds und mindestens eines Phenols, wobei das Molverhältnis von Aldehyd zu Phenol 1,5:1 bis 5,0:1 beträgt;
(b) Zugabe einer Calciumverbindung zu der wäßrigen Mischung zum Katalysieren der Reaktion zwischen Aldehyd und Phenol;
(c) Reaktion von Aldehyd und Phenol unter basischen Bedingungen und in Gegenwart der Calciumverbindung zur Bildung einer wäßrigen Lösung eines Resols; und
(d) Zugabe von Amidoschwefelsäure zu der wäßrigen Lösung zur Bildung einer Resollösung mit einer verbesserten Beständigkeit, und zwar in einer ausreichenden Menge, um einen pH-Wert von weniger als 7 und mindestens 6 einzustellen.

## Claims

1. Process for preparing a water-soluble resol having an improved storage stability with a view to its later use in the preparation of a binder for mineral fibres, the process comprising:
(a) the preparation of an aqueous mixture of at least one aldehyde and at least one phenol, the molar ratio of the aldehyde to the phenol being 1.5:1 to 5.0:1;
(b) the addition of a calcium compound to the aqueous mixture in order to catalyse the reaction between the aldehyde and the phenol;
(c) the reaction of the aldehyde and the phenol under basic conditions and in the presence of the calcium compound in order to form an aqueous solution of a resol; and
(d) the addition of sulphamic acid to the aqueous solution in order to form a resol solution having an improved stability, in an amount sufficient to establish a pH of less than 7 and of at least 6.

2. Process according to Claim 1, in which at least one phenol is phenol and at least one aldehyde is formaldehyde.

3. Process according to Claim 1 or 2, in which the calcium compound is selected from calcium oxide and calcium hydroxide.

4. Process according to Claim 2, in which the molar ratio of the formaldehyde to the phenol is approximately 3.2:1 to 3.8:1.

5. Process according to any one of the preceding claims, in which the calcium compound is added in an amount of approximately from 1% to 10% by weight, to be calculated as calcium oxide on the basis of the weight of phenol.

6. Process according to Claim 5, in which the calcium compound is added in an amount of approximately from 3% to 6% by weight, to be calculated as calcium oxide on the basis of the weight of phenol.

7. Process according to any one of the preceding claims, in which the temperature of the aqueous mixture of formaldehyde and phenol is maintained at a first value of from 40°C to 50°C while the catalyst is added, the temperature then being adjusted to increase to a second value of from 60°C to 80°C within a period of approximately 30 minutes, then being maintained until the content of free formaldehyde decreases to a value of approximately 10% of the weight of the solids of the reaction mixture.

8. Process according to Claim 7, in which the reaction mixture is neutralised by means of solid sulphamic acid, the reaction mixture being cooled to between 30°C and 40°C before the addition of the sulphamic acid.

9. Process for the preparation of a binder for mineral fibres, the process comprising the preparation of an aqueous solution of a water-soluble resol having an improved storage stability, the resol solution being prepared by a process comprising:
(a) the preparation of an aqueous mixture of at least one aldehyde and at least one phenol, the molar ratio of the aldehyde to the phenol being 1.5:1 to 5.0:1;
(b) the addition of a calcium compound to the aqueous mixture in order to catalyse the reaction between the aldehyde and the phenol;
(c) the reaction of the aldehyde and the phenol under basic conditions and in the presence of the calcium compound in order to form an aqueous solution of a resol; and
(d) the addition of sulphamic acid to the aqueous solution in order to form a resol solution having an improved stability, in an amount sufficient to establish a pH of less than 7 and of at least 6.

10. Process according to Claim 9, also comprising the addition of at least one nitrogen-containing reactant selected from urea, ammonia, ammonium salts, dicyanodiamide, melamine and aminoplastic resins.

11. Process according to Claim 10, in which the nitrogen-containing reactant is urea.

12. Process according to Claim 10 or 11, in which the nitrogen-containing reactant is added for reaction with substantially all of the residual formaldehyde in the aqueous resol solution.

13. Process according to any one of Claims 10 to 12, in which the nitrogen-containing reactant is added in an amount of up to 75% by weight based on the weight of the total solids.

14. Process for the production of a manufactured product for use as a thermal insulator and which comprises mineral fibres and a resinous binder for the mineral fibres, the process comprising the preparation of an aqueous solution of a water-soluble resol with a view to its later use in the preparation of the resinous binder by:
(a) the preparation of an aqueous mixture of at least one aldehyde and at least one phenol, the molar ratio of the aldehyde to the phenol being 1.5:1 to 5.0:1;
(b) the addition of a calcium compound to the aqueous mixture in order to catalyse the reaction between the aldehyde and the phenol;
(c) the reaction of the aldehyde and the phenol under basic conditions and in the presence of the calcium compound in order to form an aqueous solution of a resol; and
(d) the addition of sulphamic acid to the aqueous solution in order to form a resol solution having an improved stability, in an amount sufficient to establish a pH of less than 7 and of at least 6.
